(19) Europäisches Patentamt
European Patent Office
Office européen des brevets

(11) **EP 2 216 589 B1**

(12) **FASCICULE DE BREVET EUROPEEN**

(45) Date de publication et mention
de la délivrance du brevet:
**28.11.2018 Bulletin 2018/48**

(21) Numéro de dépôt: **10151627.6**

(22) Date de dépôt: **26.01.2010**

(51) Int Cl.:
*G02B 6/00* *(2006.01)*       *F21V 8/00* *(2006.01)*
*F21S 43/239* *(2018.01)*     *F21S 43/249* *(2018.01)*
*F21S 43/243* *(2018.01)*     *F21Y 115/10* *(2016.01)*
*B29D 11/00* *(2006.01)*

(54) **Dispositif optique d'éclairage ou de signalisation, notamment pour un véhicule**

Optische Vorrichtung zur Beleuchtung oder Signalisierung, nämlich für ein Kraftfahrzeug

Optical device for lighting or signalisation, in particular for a vehicle

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **05.02.2009 FR 0900507**

(43) Date de publication de la demande:
**11.08.2010 Bulletin 2010/32**

(73) Titulaire: **Valeo Vision**
**93012 Bobigny (FR)**

(72) Inventeur: **De Lamberterie, Antoine**
**75019, PARIS (FR)**

(56) Documents cités:
**EP-A- 1 500 869       EP-A- 1 857 732
EP-A- 1 881 263       EP-A- 1 992 868
WO-A-2007/040527   DE-A1-102005 046 538
US-A- 5 876 107**

**Description**

L'invention concerne un dispositif optique, notamment pour véhicule automobile, tel qu'un dispositif d'éclairage ou de signalisation.

On connaît par la demande de brevet EP 1 881 263, du déposant, un dispositif d'éclairage ou de signalisation pour un véhicule automobile. Le dispositif d'éclairage est susceptible d'émettre un faisceau lumineux "F" selon un axe optique longitudinal "A".

Ce dispositif d'éclairage comporte au moins une nappe de guidage de la lumière, dont une partie au moins se présente sous la forme d'une portion de calotte sphérique.

La nappe de guidage est ainsi délimitée dans le sens de l'épaisseur, par deux faces de guidage sensiblement parallèles entre elles sur au moins une partie de la nappe.

La nappe de guidage est délimitée latéralement par une tranche avant de sortie des rayons lumineux et par une tranche arrière de réflexion de la lumière. Les extrémités de la tranche de réflexion sont directement raccordées aux extrémités de la tranche de sortie de manière à former le contour extérieur de la nappe de guidage.

Le contour de la tranche de sortie de la lumière forme un arc de cercle plan.

La nappe de guidage comporte un orifice d'entrée de la lumière dans la nappe.

Une source lumineuse est agencée dans l'orifice à proximité ou au contact de la tranche d'entrée des rayons lumineux.

La source lumineuse est susceptible d'émettre des rayons lumineux selon une direction globalement radiale autour d'un axe de source "S" qui est normal à la nappe de guidage. Plus précisément, la source lumineuse est susceptible d'émettre un éventail de rayons lumineux radialement au moins en direction de la tranche de réflexion.

La nappe de guidage est réalisée en un matériau transparent dont l'indice de réfraction est supérieur à l'indice de réfraction du milieu dans lequel le dispositif d'éclairage est destiné à être immergé, par exemple l'air. Ainsi, un rayon lumineux introduit dans l'épaisseur de la nappe par sa tranche d'entrée rencontre les faces de guidage supérieure ou inférieure avec un angle d'incidence par rapport à la normale "N" qui est supérieur à un angle limite de réfraction. Le rayon est alors susceptible d'être réfléchi totalement par les faces de guidage.

Le rayon lumineux est donc guidé dans l'épaisseur de la nappe de guidage par réflexions successives entre les deux faces de guidage.

Les rayons lumineux incidents qui partent vers l'arrière sont destinés à être réfléchis par la tranche de réflexion, puis les rayons lumineux ainsi réfléchis sont dirigés vers la tranche de sortie. Les rayons lumineux réfléchis sortent ainsi par la tranche de sortie.

La source lumineuse est une diode électroluminescente ou "LED" dite "Side-Emitter" qui émet des rayons lumineux dirigés sensiblement perpendiculairement à l'axe de source "S".

La source lumineuse peut également être constituée d'une lampe à incandescence, par exemple une lampe halogène, à filament axial, insérée dans le contour délimité par la tranche d'entrée. On pourra alors avantageusement prévoir dans ce cas qu'une zone de la nappe de guidage, au voisinage de la tranche d'entrée, soit réalisée en verre, alors que le reste de la nappe sera réalisée en matériau plastique surmoulé sur cette zone en verre. Une telle conception permet de s'affranchir des problèmes thermiques que pourrait générer l'utilisation d'une source à incandescence.

Dans le dispositif décrit ci-dessus, la tranche de sortie, ou face de sortie, présente une forme généralement plane, avec un profil général en arc de cercle.

On connaît par la demande de brevet EP 1 992 886 un dispositif avec une nappe de guidage.

Les configurations ci-dessus correspondent notamment à des profils circulaires ou annulaires, et la zone du guide à proximité de la source est proche d'une portion de sphère.

Il existe notamment un besoin, en particulier à la demande de constructeurs automobiles, pour un guide de lumière sensiblement du type décrit ci-dessus, qui présente une face de sortie ayant une forme quelconque, notamment une forme non planaire, s'étendant soit dans un plan perpendiculaire à l'axe optique soit dans un plan contenant l'axe optique.

L'invention vise notamment à répondre à ce besoin.

**[0020]** - L'invention a ainsi pour objet un dispositif optique, notamment pour véhicule automobile, tel qu'un dispositif d'éclairage ou de signalisation, comportant :

- au moins une source lumineuse,
- au moins un guide de lumière agencé pour guider au moins une partie de la lumière émise par la source lumineuse, le guide de lumière comportant au moins une face de sortie et au moins une face de réflexion agencée pour réfléchir, vers la face de sortie, de la lumière se propageant dans le guide,

le dispositif étant caractérisé par le fait que le guide de lumière présente une forme de nappe cylindrique.

Dans la présente invention, un cylindre désigne une surface dans l'espace, définie par une droite, appelée génératrice, d'une part passant par un point variable décrivant une courbe fermée ou ouverte, appelée courbe directrice, et d'autre part gardant une direction fixe.

Une nappe désigne un solide présentant deux faces principales, planes ou courbes, qui sont sensiblement parallèles entre elles, et l'épaisseur de ce solide mesurée entre les deux faces principales est substantiellement plus faible que des dimensions, telles que la longueur ou la largeur, de ces faces principales.

La nappe cylindrique selon l'invention est de préférence non plane.

La construction du dispositif optique selon l'invention offre la possibilité d'avoir un guide de lumière avec une face de sortie qui présente une forme quelconque, répondant à des exigences de constructeurs automobiles.

Cette construction permet notamment d'obtenir un guide de lumière avec une face de sortie ayant une forme qui ne pourrait pas être obtenue à l'aide d'un guide de lumière en calotte sphérique tel que celui décrit dans la demande de brevet précité EP 1 881 263.

Dans un exemple de mise en oeuvre de l'invention, la face de sortie du guide de lumière est différente d'une portion de plan, c'est-à-dire cette face de sortie est non entièrement contenue dans un plan.

Si on le souhaite, la face sortie est contenue dans une surface en trois dimensions, notamment différente d'une sphère.

Cette face de sortie peut être incluse dans une surface réglée ou, en variante, dans une surface quelconque non réglée.

On désigne par surface réglée une surface par chaque point de laquelle passe une droite contenue dans la surface.

Le cas échéant, la face de sortie est agencée pour diffuser la lumière quittant cette face de sortie, notamment à l'aide de stries sur cette face de sortie.

La face de sortie peut présenter une forme annulaire fermée ou ouverte.

Dans un exemple de mise en oeuvre de l'invention, la face de réflexion du guide de lumière est incluse dans une surface réglée générée par des droites perpendiculaires à l'axe longitudinal de la nappe cylindrique.

En variante, la face de réflexion est incluse dans deux surfaces réglées qui se coupent notamment en formant à l'intersection un angle compris entre 70° et 110°, et notamment voisin de 90°.

La face de réflexion peut présenter une forme annulaire fermée ou ouverte.

Le guide de lumière peut être monolithique, étant réalisé d'un seul tenant, par exemple par moulage d'une matière plastique.

Dans un exemple de mise en oeuvre de l'invention, le guide de lumière comporte au moins une cavité d'entrée de la lumière, cette cavité étant notamment agencée pour recevoir au moins partiellement la source lumineuse. Cette cavité débouche de préférence sur l'une au moins des faces principales du guide de lumière, et non par exemple sur une tranche arrière de cette nappe.

Eventuellement cette cavité est traversante.

Le cas échéant, la source de lumière reste en surface du guide de lumière.

Si on le souhaite, le dispositif comporte une pluralité de sources lumineuses agencées pour éclairer le guide de lumière.

Dans un exemple de mise en oeuvre de l'invention, le dispositif est agencé pour émettre, par la face de sortie du guide de lumière, une lumière d'intensité lumineuse comprise entre 50 candelas et 1000 candelas.

Le dispositif optique peut par exemple remplir une fonction du type DRL (*Daytime Running Light* ou Lumière pour la circulation de jour), du type Stop, du type anti-brouillard, du type indicateur de direction ou du type recul.

Par exemple le guide lumière présente une épaisseur comprise entre 2 mm et 6 mm, notamment entre 3 mm et 5 mm.

Le cas échéant, la face de réflexion comporte, an moins sur une partie de sa longueur, un aluminiage.

En variante, la face arrière de réflexion est agencée pour permettre une réflexion de la lumière se propageant dans le guide par simple ou double réflexion totale.

Cette double réflexion totale est en particulier réalisée dans le cas où la face de réflexion est incluse dans deux surfaces réglées qui se coupent.

De préférence, le guide de lumière est agencé de manière à ce que le faisceau de lumière issu de la face de sortie soit sensiblement parallèle à l'axe optique du dispositif de sorte que l'éclairement provenant du guide apparaisse sensiblement homogène.

Par exemple, la source lumineuse comporte au moins une LED, notamment une LED à rayonnement radial.

Si on le souhaite, le dispositif comporte une pluralité de guides de lumière disposés côte à côte.

Dans un exemple de mise en oeuvre de l'invention, le guide de lumière se prolonge, du côté de sa face de sortie, par une portion guidant la lumière qui présente une forme non nécessairement en nappe cylindrique.

L'invention a également pour objet un dispositif optique, notamment pour véhicule automobile, tel qu'un dispositif d'éclairage ou de signalisation, comportant :

- au moins une source lumineuse,
- au moins un guide de lumière agencé pour guider au moins une partie de la lumière émise par la source lumineuse, le guide de lumière comportant au moins une face de sortie et au moins une face de réflexion agencée pour réfléchir, vers la face de sortie, de la lumière se propageant dans le guide,

le dispositif étant caractérisé par le fait que la face de sortie du guide de lumière est non entièrement plane.

L'invention a encore pour objet un guide de lumière agencé pour guider au moins une partie de la lumière émise par une source lumineuse, le guide de lumière comportant au moins une face de sortie et au moins une face de réflexion agencée pour réfléchir, vers la face de sortie, de la lumière se propageant dans le guide, ce guide de lumière présentant une forme de nappe cylindrique.

L'invention concerne également un procédé de fabrication d'un guide de lumière, ce guide de lumière étant agencé pour guider au moins une partie de la lumière émise par une source lumineuse, le guide de lumière comportant au moins une face de sortie et au moins une face de réflexion agencée pour réfléchir, vers la face de sortie, de la lumière se propageant dans le guide, ce guide de lumière présentant un axe optique, la face de sortie présentant une forme prédéterminée imposée, le procédé comportant les étapes suivantes :

a/ obtenir une ébauche géométrique de nappe cylindrique en extrudant la face de sortie parallèlement à l'axe optique,
b/ réaliser une opération géométrique de manière à déplier l'ébauche de nappe cylindrique et la mettre à plat,
c/ obtenir, pour cette ébauche géométrique de nappe dépliée, une forme de la ou des faces de réflexion,
d/obtenir une forme (en trois dimensions) de nappe cylindrique en fonction de ladite forme de la face de réflexion,
e/ fabriquer, notamment par moulage d'une matière plastique, le guide de lumière avec ladite forme de nappe cylindrique obtenue.

Dans un exemple de mise en oeuvre de l'invention, l'ébauche de nappe dépliée obtenue à l'étape b/ peut présenter une face de sortie dépliée avec un contour plan, cette face de sortie dépliée étant obtenue en fonction de la face de sortie imposée.

A l'étape c/, le contour de la face de réflexion est obtenu à partir d'un profil plan du contour de la face de sortie obtenu précédemment, en considérant la conservation du chemin optique sur la face de réflexion.

Selon l'invention, l'ensemble de la nappe peut être cylindrique ou correspondre à une surface réglée.

La face de sortie peut être une courbe 3D complexe non incluse dans un plan ou dans une sphère.

La propriété de surface réglée de la nappe peut notamment être présente au niveau de la source de lumière.

L'invention permet des guides à profil relativement complexe.

Selon l'invention, le guide peut être réalisé par extrusion.

L'invention pourra être mieux comprise à la lecture de la description détaillée qui va suivre, d'exemples de mise en oeuvre non limitatifs de l'invention, et à l'examen du dessin annexé, sur lequel :

- la figure 1 illustre, schématiquement et partiellement, en perspective, un dispositif optique selon un exemple de mise en oeuvre de l'invention,
- la figure 2 représente, schématiquement et partiellement, suivant une coupe transversale suivant II-II, le dispositif de la figure 1,
- la figure 3 illustre, schématiquement et partiellement, le trajet d'un rayon lumineux réfléchi sur la face de réflexion du guide de lumière du dispositif de la figure 1,
- la figure 4 représente, schématiquement et partiellement, une ébauche géométrique de nappe cylindrique obtenue en extrudant la face de sortie du guide de lumière de la figure 1,
- la figure 5 illustre, schématiquement et partiellement, le principe de calcul du profil de la face de réflexion du guide de la figure 1,
- la figure 6 représente, schématiquement et partiellement, un guide de lumière conforme à un autre exemple de mise en oeuvre de l'invention, et
- la figure 7 représente, schématiquement et partiellement, un dispositif optique avec deux guides de lumière côte à côte, conforme à un autre exemple de mise de l'invention.

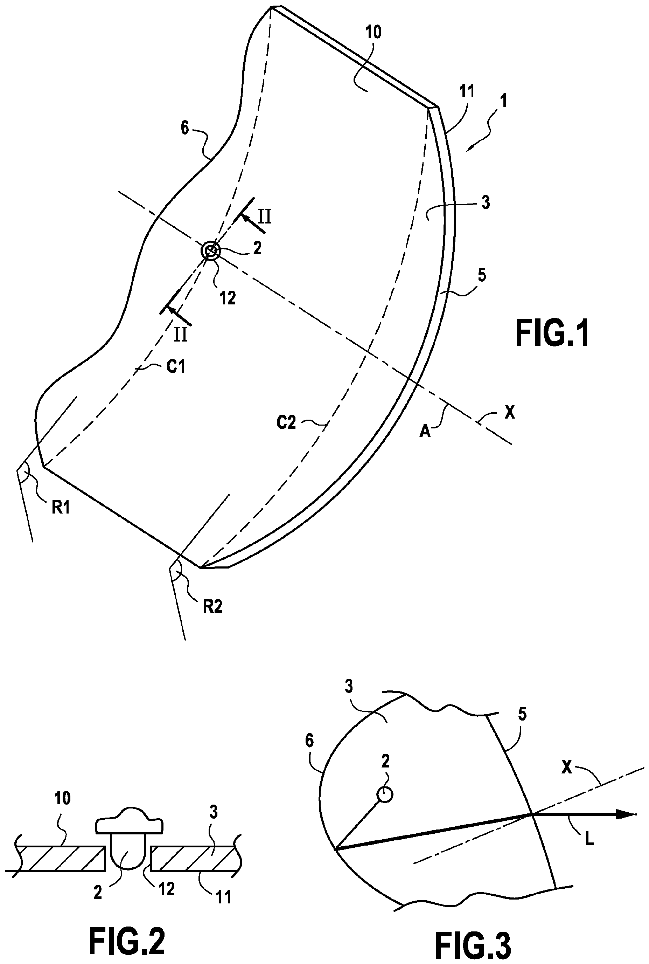

On a représenté sur les figures 1 et 3 un dispositif optique 1 pour véhicule automobile, tel qu'un dispositif d'éclairage ou de signalisation, comportant :

- une source lumineuse 2 formée par une LED à rayonnement radial,
- un guide de lumière 3 agencé pour guider une partie de la lumière émise par la source lumineuse 2, le guide de lumière 3 comportant au moins une face de sortie 5 et au moins une face de réflexion 6 agencée pour réfléchir, vers la face de sortie 5, de la lumière L se propageant dans le guide 3.

Le guide de lumière 3 présente une forme de nappe cylindrique non plane d'axe longitudinal X et présente deux faces principales 10 et 11 non planes, qui sont sensiblement parallèles entre elles.

Dans l'exemple décrit, la nappe cylindrique est ouverte, c'est-à-dire elle ne se referme pas sur elle-même autour de l'axe X.

L'épaisseur de ce guide de lumière 3 mesurée entre les deux faces principales 10 et 11 est par exemple comprise entre 3 mm et 5 mm.

On a représenté sur la figure 1, pour une meilleure clarté du dessin, les intersections (lignes C1 et C2 en pointillés) entre deux plans R1 et R2 (perpendiculaires à l'axe X) avec la nappe cylindrique.

La face de sortie 5 du guide de lumière est différente d'une portion de plan, c'est-à-dire cette face de sortie 5 est non entièrement contenue dans le plan R2.

En particulier, cette face de sortie 5 est contenue dans une surface en trois dimensions différente d'une sphère.

Cette face de sortie 5 peut comporter des stries pour diffuser la lumière issue de cette face 5.

Par ailleurs la face de réflexion 6 du guide de lumière 3 est incluse dans une surface réglée générée par des droites perpendiculaires à la nappe cylindrique.

En variante, la face de réflexion 6 peut être incluse dans deux surfaces réglées qui se coupent notamment en formant à l'intersection un angle compris entre 70° et 110°, et notamment voisin de 90°.

Dans l'exemple décrit, le guide de lumière 3 est monolithique, étant réalisé d'un seul tenant, par exemple par moulage d'une matière plastique d'indice de réfraction n.

La matière plastique utilisée peut par exemple être du PMMA d'indice de réfraction de 1.49 ou du PC d'indice de réfraction de 1.59.

La face de réflexion 6 peut comporter, au moins sur une portion de sa longueur, un aluminiage ou, en variante, celle-ci est agencée pour permettre une réflexion de la lumière se propageant dans le guide 3 par simple ou double réflexion totale.

Comme illustré sur la figure 2, le guide de lumière 3 comporte une cavité 12 d'entrée de la lumière, cette cavité 12 étant agencée pour recevoir au moins partiellement la source lumineuse 2.

Cette cavité 12, qui est traversante, débouche sur les faces principales 10 et 11 du guide de lumière 3.

Dans l'exemple décrit, le dispositif 1 est agencé pour émettre, par la face de sortie 5 du guide de lumière 3, une lumière d'intensité lumineuse comprise entre 50 candelas et 1000 candelas.

Le guide de lumière 3 est agencé de manière à ce que le faisceau de lumière issu de la face de sortie 5 soit sensiblement parallèle à l'axe optique A du dispositif 1 de sorte que l'éclairement provenant du guide apparaisse sensiblement homogène et de telle sorte que les rayons soient en moyenne dirigés le long de l'axe A.

Dans l'exemple décrit, l'axe optique A et l'axe géométrique X sont confondus.

On va maintenant décrire plus en détail le procédé de fabrication du guide de lumière 3.

Il convient de noter que ce procédé vise à obtenir un guide de lumière 3 avec un face de sortie 5 prédéterminée, dont la forme en trois dimensions est imposée par exemple par un constructeur automobile.

Comme on le verra ci-dessous, le procédé comporte une étape importante pour déterminer la forme de la face de réflexion 6 qui soit adaptée par rapport à la face de sortie 5 imposée, afin que la face de sortie soit vue de façon homogène et afin que, en moyenne, les rayons issus de la face de sortie la quittent suivant la direction de l'axe optique.

Le procédé selon l'invention comporte les étapes suivantes :

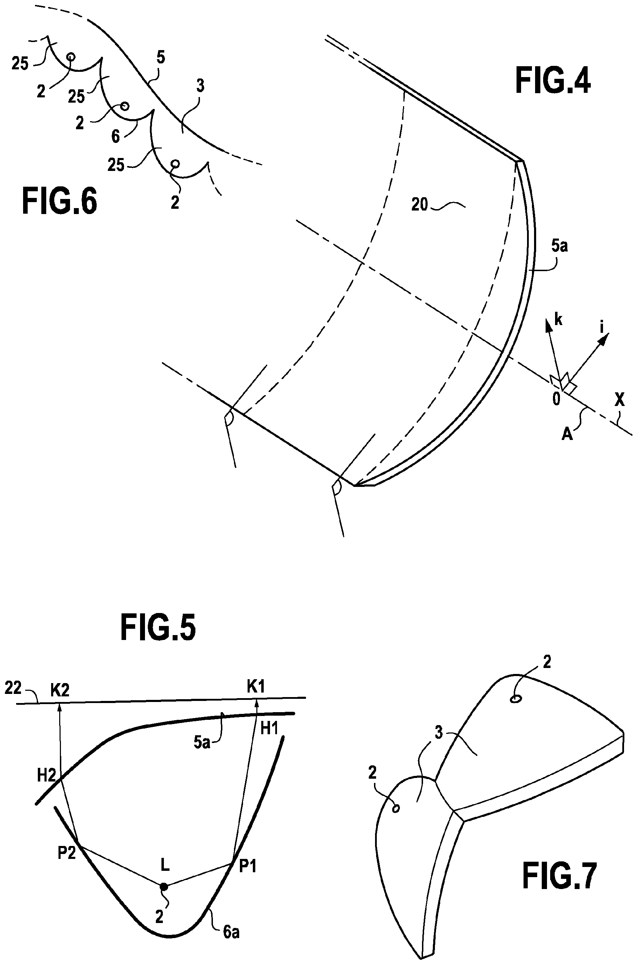

a/ obtenir une ébauche géométrique 20 de nappe cylindrique en extrudant (en termes géométriques) la face de sortie 5 parallèlement à l'axe optique A, comme illustré sur la figure 4,
b/ réaliser une opération géométrique de manière à déplier l'ébauche 20 de nappe cylindrique et la mettre à plat,
c/ obtenir, pour cette ébauche géométrique 20 de nappe dépliée, une forme de la face de réflexion,
d/ obtenir une forme (en trois dimensions) de nappe cylindrique en fonction de ladite forme de la face de réflexion,
e/ fabriquer, par moulage d'une matière plastique, le guide de lumière 3 avec ladite forme de nappe cylindrique obtenue.

Dans l'exemple décrit, l'ébauche 20 de nappe dépliée obtenue à l'étape b/ peut présenter une face de sortie dépliée 5a avec un contour plan, cette face de sortie dépliée, à plat, 5a étant obtenue à partir de la face de sortie 5 imposée.

Cette face de sortie dépliée 5a avec un contour plan peut être obtenue de la manière suivante.

Considérons l'axe optique A, (Oi) un axe transversal et (Ok) un axe vertical, et un point M de coordonnées (x, y, z) du contour de la face de sortie 5 imposée.

Le contour de la face de sortie dépliée 5a se calcule de la manière suivante.

Considérons un point M' de ce contour.

Ce point M' de coordonnées (x', y', z') image du point M précité est déterminé comme suit.

$z' = 0$

$y' = y$

x' est calculé à partir de l'abscisse curviligne de la projection du profil en trois dimensions de la face de sortie 5 imposée sur un plan perpendiculaire à l'axe optique A.

Une fois que l'ébauche 20 de la nappe a été dépliée et le contour de la face de sortie dépliée 5a calculée, on détermine la face de réflexion plane 6a (voir figure 5) en utilisant le principe de la conservation du chemin optique sur la face de réflexion 6a.

En référence à la figure 5, ce principe correspond au fait que le chemin optique entre la source lumineuse 2 et la surface d'onde de sortie 22 est constant, à savoir :

$$n.(LP1) + n.(P1H1) + (H1K1) = n.(LP2) + n.(P2H2) + (H2K2) = \text{constante}$$

P1 et P2 sont des points de la face de réflexion plane 6a dépliée, H1 et H2 des points de la face de sortie dépliée 5a, K1 et K2 des points de la surface d'onde 22, et L un point désignant la source lumineuse 2.

Déterminer le profil de la face de réflexion dépliée plane 6a revient à trouver le lieu décrit par les points P1, P2.

Le déposant a constaté que cette méthode est particulièrement efficace et permet d'obtenir rapidement des résultats satisfaisants.

Puis on reconstruit la nappe avec le contour la face de réflexion 6 adapté en faisant une opération géométrique de repliement de la nappe de la manière suivante.

Après l'étape c/, on obtient le contour de la face de réflexion 6 qui découpe la nappe.

En repliant la nappe (étape d/), on aboutit au contour en question.

La face de réflexion 6 en trois dimensions est construite comme une ou plusieurs surfaces réglées qui s'appuient sur le nouveau contour.

Considérons P de coordonnées (x, y, z) un point du contour de la face de réflexion à plat 6a et P' de coordonnées (x', y', z') un point du contour de la face de réflexion finale 6 sur la nappe dite 'réelle'.

On a :

y'=y

et x' et z' sont calculés en considérant le point associé du profil avant.

Le profil de la face de réflexion 6 est calculé pour la nappe 'réelle' en trois dimensions, en construisant cette face arrière 6 de manière à ce qu'elle soit incluse dans une surface réglée constituée de l'ensemble des segments de droites perpendiculaires à la nappe en tout point du profil de la face de réflexion 6.

Dans un cas, la surface réglée est définie avec l'ensemble des normales à la nappe qui passent par le contour.

En variante, on crée deux surfaces définies par des droites passant par le contour et formant un angle de 90° l'une par rapport à l'autre, la bissectrice des deux droites étant tangente à la nappe.

Bien entendu, l'invention n'est pas limitée à l'exemple de mise en oeuvre qui vient d'être décrit.

Par exemple, comme illustré sur la figure 6, le guide de lumière 3 peut comporter plusieurs pétales 25 mises bout à bout, permettant de réaliser un guide de lumière de grandes dimensions tout en conservant une profondeur raisonnable.

En outre, cela permet d'obtenir des fonctions avec une forte intensité en utilisant plusieurs LED ayant chacune un flux relativement faible.

Par exemple encore, comme illustré sur la figure 7, le dispositif optique peut comporter deux guides de lumière 3 disposés de manière adjacente.

## Revendications

1. Guide de lumière (3) agencé pour guider au moins une partie de la lumière émise par une source lumineuse, le guide de lumière comportant au moins une face de sortie (5) et au moins une face de réflexion (6) agencée pour réfléchir, vers la face de sortie, de la lumière se propageant dans le guide, ce guide de lumière présentant une forme de nappe cylindrique le guide étant par le fait que la face de sortie (5) est contenue dans une surface en trois dimensions, notamment différente d'une sphère par le fait que la face de réflexion (6) du guide de lumière est incluse dans une surface réglée (6) générée par des droites perpendiculaires à l'axe longitudinal (X) de la nappe cylindrique ou que la face de réflexion (6) est incluse dans deux surfaces réglées qui se coupent notamment en formant à l'intersection un angle compris entre 70° et 110°, et notamment voisin de 90°

2. Dispositif optique (1), notamment pour véhicule automobile, tel qu'un dispositif d'éclairage ou de signalisation, comportant :

- au moins une source lumineuse (2),
- au moins un guide de lumière (3) selon la revendication 1, agencé pour guider au moins une partie de la lumière émise par la source lumineuse.

**3.** Dispositif selon la revendication 2, **caractérisé par le fait que** la face de sortie (5) est agencée pour diffuser la lumière quittant cette face de sortie, notamment à l'aide de stries sur cette face de sortie.

**4.** Dispositif selon l'une quelconque des revendications 2 à 3, **caractérisé par le fait que** le guide de lumière est monolithique, notamment par moulage d'une matière plastique.

**5.** Dispositif selon l'une quelconque des revendications 2 à 4, **caractérisé par le fait que** le guide de lumière (3) comporte au moins une cavité (12) d'entrée de la lumière, cette cavité étant notamment agencée pour recevoir au moins partiellement la source lumineuse.

**6.** Dispositif selon l'une quelconque des revendications 2 à 5, **caractérisé par le fait que** le guide de lumière (3) est agencé de manière à ce que le faisceau de lumière issu de la face de sortie (5) soit sensiblement parallèle à l'axe optique (A) du dispositif.

**7.** Dispositif selon l'une quelconque des revendications 2 à 6, **caractérisé par le fait que** la source lumineuse comporte au moins une LED, notamment une LED à rayonnement radial.

**8.** Dispositif selon l'une quelconque des revendications 2 à 7, **caractérisé par le fait que** le guide de lumière se prolonge, du côté de sa face de sortie, par une portion guidant la lumière qui présente une forme en nappe cylindrique ou non.

**9.** Procédé de fabrication d'un guide de lumière (3) selon la revendication 1, le procédé comportant les étapes suivantes :

a/ obtenir une ébauche géométrique (20) de nappe cylindrique en extrudant la face de sortie parallèlement à l'axe optique,
b/ réaliser une opération géométrique de manière à déplier l'ébauche de nappe cylindrique et la mettre à plat,
c/ obtenir, pour cette ébauche géométrique de nappe dépliée, une forme de la ou des faces de réflexion,
d/obtenir une forme de nappe cylindrique en fonction de ladite forme de la face de réflexion,
e/ fabriquer, notamment par moulage d'une matière plastique, le guide de lumière avec ladite forme de nappe cylindrique obtenue.

**10.** Procédé selon la revendication précédente, **caractérisé par le fait que** l'ébauche (20) de nappe dépliée obtenue à l'étape b/ présente une face de sortie dépliée 5a avec notamment un contour plan.

**11.** Procédé selon l'une des revendications 9 et 10, **caractérisé par le fait que**, à l'étape c/, le contour de la face de réflexion est obtenu à partir d'un profil plan de la face de sortie obtenu à l'étape de la revendication précédente, en considérant la conservation du chemin optique sur la face de réflexion.


**Patentansprüche**

**1.** Lichtleiter (3), der angeordnet ist, mindestens einen Teil des Lichts zu leiten, das von der Lichtquelle abgegeben wird, wobei der Lichtleiter mindestens eine Austrittsfläche (5) und mindestens eine Reflexionsfläche (6), die angeordnet ist, Licht zu reflektieren, das sich in dem Leiter ausbreitet, aufweist, wobei dieser Lichtleiter eine Form einer zylindrischen Schicht aufweist,
wobei der Leiter dadurch, dass die Austrittsfläche (5) in einer Fläche aus drei Dimensionen enthalten ist, die sich insbesondere von einer Kugel unterscheidet, dadurch, dass die Reflexionsfläche (6) des Lichtleiters in einer geregelten Fläche (6) enthalten ist, die von Geraden erzeugt wird, die senkrecht zu der Längsachse (X) der zylindrischen Schicht verlaufen, oder dass die Reflexionsfläche (6) in zwei geregelten Flächen enthalten ist, die sich schneiden, insbesondere, indem sie am Schnittpunkt einen Winkel zwischen 70° und 110°, und insbesondere um die 90° bilden.

**2.** Optische Vorrichtung (1), insbesondere für ein Kraftfahrzeug, wie beispielsweise eine Beleuchtungs- oder Signalisierungsvorrichtung, umfassend:

- mindestens eine Lichtquelle (2),
- mindestens einen Lichtleiter (3) nach Anspruch 1, der angeordnet ist, mindestens einen Teil des Lichts zu leiten, das von der Lichtquelle abgegeben wird.

3. Vorrichtung nach Anspruch 2, **dadurch gekennzeichnet, dass** die Austrittsfläche (5) angeordnet ist, das Licht zu streuen, das diese Austrittsfläche verlässt, insbesondere mithilfe von Riefen auf dieser Austrittsfläche.

4. Vorrichtung nach einem der Ansprüche 2 bis 3, **dadurch gekennzeichnet, dass** der Lichtleiter monolithisch ist, insbesondere durch Formen eines Kunststoffs.

5. Vorrichtung nach einem der Ansprüche 2 bis 4, **dadurch gekennzeichnet, dass** der Lichtleiter (3) mindestens einen Eintrittshohlraum (12) des Lichts aufweist, wobei dieser Hohlraum insbesondere angeordnet ist, die Lichtquelle zumindest teilweise aufzunehmen.

6. Vorrichtung nach einem der Ansprüche 2 bis 5, **dadurch gekennzeichnet, dass** der Lichtleiter (3) derart angeordnet ist, dass der Lichtstrahl, der aus der Austrittsfläche (5) ausgetreten ist, im Wesentlichen parallel zu der optischen Achse (A) der Vorrichtung verläuft.

7. Vorrichtung nach einem der Ansprüche 2 bis 6, **dadurch gekennzeichnet, dass** die Lichtquelle mindestens eine LED aufweist, insbesondere eine Radialstrahlungs-LED.

8. Vorrichtung nach einem der Ansprüche 2 bis 7, **dadurch gekennzeichnet, dass** der Lichtleiter auf der Seite seiner Austrittsfläche durch einen Abschnitt verlängert ist, der das Licht leitet, der eine Form einer zylindrischen Schicht aufweist oder nicht.

9. Verfahren zur Herstellung eines Lichtleiters (3) nach Anspruch 1,
   wobei das Verfahren die folgenden Schritte umfasst:

   a. Erhalten eines geometrischen Entwurfs (20) einer zylindrischen Schicht durch Extrudieren der Austrittsfläche parallel zur optischen Achse,
   b. Ausführen einer geometrischen Operation, um den Entwurf einer zylindrischen Schicht aufzufalten und flach zu machen,
   c. Erhalten einer Form der Reflexionsfläche(n) für diesen geometrischen Entwurf einer aufgefalteten Schicht,
   d. Erhalten einer Form einer zylindrischen Schicht in Abhängigkeit von der Form der Reflexionsfläche,
   e. Herstellen, insbesondere durch Formen eines Kunststoffs, des Lichtleiters mit der erhaltenen Form einer zylindrischen Schicht.

10. Verfahren nach dem vorhergehenden Anspruch, **dadurch gekennzeichnet, dass** der aufgefaltete Entwurf (20) einer Schicht, der bei Schritt b. erhalten wird, eine aufgefaltete Austrittsfläche 5a insbesondere mit einer ebenen Kontur aufweist.

11. Verfahren nach einem der Ansprüche 9 und 10, **dadurch gekennzeichnet, dass** bei Schritt c. die Kontur der Reflexionsfläche auf Grundlage eines ebenen Profils der Austrittsfläche, das beim Schritt des vorhergehenden Anspruchs erhalten wird, unter Berücksichtigung der Beibehaltung des optischen Weges auf der Reflexionsfläche erhalten wird.

**Claims**

1. Light guide (3) designed to guide at least a part of the light emitted by a light source, the light guide comprising at least one outlet face (5) and at least one reflective face (6) designed to reflect, towards the outlet face, light propagating through the guide, this light guide being in the form of a cylindrical layer, the guide being in that the outlet face (5) is contained in a three-dimensional surface, notably other than a sphere, in that the reflective face (6) of the light guide is included in a ruled surface (6) generated by straight lines perpendicular to the longitudinal axis (X) of the cylindrical layer, or in that the reflective face (6) is included in two ruled surfaces that intersect, notably forming an angle of between 70° and 110°, and notably around 90°, at the intersection.

2. Optical device (1), notably for a motor vehicle, such as a lighting or signalling device, comprising:

- at least one light source (2),
- at least one light guide (3) according to Claim 1, designed to guide at least a part of the light emitted by the light source.

3. Device according to Claim 2, **characterized in that** the outlet face (5) is designed to diffuse the light leaving this outlet face, notably with the aid of striations on this outlet face.

4. Device according to either one of Claims 2 and 3, **characterized in that** the light guide is formed in one piece, notably by moulding a plastics material.

5. Device according to any one of Claims 2 to 4, **characterized in that** the light guide (3) has at least one light-inlet cavity (12), this cavity being notably designed to at least partially receive the light source.

6. Device according to any one of Claims 2 to 5, **characterized in that** the light guide (3) is designed such that the light beam output by the outlet face (5) is substantially parallel to the optical axis (A) of the device.

7. Device according to any one of Claims 2 to 6, **characterized in that** the light source comprises at least one LED, notably a radially emitting LED.

8. Device according to any one of Claims 2 to 7, **characterized in that** the light guide is continued, on its outlet-face side, by a light-guiding portion that is or is not in the form of a cylindrical layer.

9. Method for manufacturing a light guide (3) according to Claim 1, the method comprising the following steps:

   a/ obtaining a geometric cylindrical-layer blank (20) by extruding the outlet face parallel to the optical axis,
   b/ carrying out a geometric operation so as to unfold the cylindrical-layer blank and flatten it,
   c/ obtaining, for this unfolded geometric layer blank, a form of the reflective face(s),
   d/ obtaining the form of a cylindrical layer depending on said form of the reflective face,
   e/ manufacturing the light guide with said obtained cylindrical-layer form, notably by moulding a plastics material.

10. Method according to the preceding claim, **characterized in that** the unfolded layer blank (20) obtained in step b/ has an unfolded outlet face (5a) with notably a flat contour.

11. Method according to either of Claims 9 and 10, **characterized in that**, in step c/, the contour of the reflective face is obtained from a flat profile of the outlet face obtained in the step of the preceding claim, considering the preservation of the optical path on the reflective face.

**FIG.1**

**FIG.2**

**FIG.3**

FIG.4

FIG.6

25
2
25
2
6
25
2
5
3

20

5a

k
i
0
X
A

FIG.5

22
K2
K1
H1
5a
H2
P2
L
P1
2
6a

2
3
2

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1881263 A

- EP 1992886 A